# EUROPÄISCHE PATENTANMELDUNG

(11) **EP 0 536 082 A1**
(43) Veröffentlichungstag der Anmeldung: **07.04.1993**
(21) Anmeldenummer: 92810701.0
(22) Anmeldetag: 11.09.1992
(51) Int. Cl.: B65D 41/34, B29C 45/00, B29C 45/44

(54) **Verschlusskappe aus Kunststoff und Werkzeug zu ihrer Herstellung**

(30) Priorität: 04.10.1991 CH 2929/91
(71) Anmelder: Crown Cork AG, CH-4153 Reinach (CH)
(72) Erfinder: Breuer, Hans-Werner, CH-4242 Laufen (CH); Bartl, Franz Thomas, CH-4123 Allschwil (CH); Kirchgessner, Michael, W-7859 Efringen-Kirchen (DE)
(74) Vertreter: Hepp, Dieter

(57) **Zusammenfassung**

Eine Verschlusskappe (1) wird im Spritzgussverfahren einstückig zusammen mit einem Garantieband (2) hergestellt. Zwischen Verschlusskappe (1) und Garantieband (2) sind Verbindungselemente (9) vorgesehen. Die Angussöffnung (8) im äusseren Werkzeugteil (5) ist exzentrisch angeordnet. Sie weist vorzugsweise einen Mindestabstand von 0,2 d zum Zentrum und von 0,15 d zur äusseren Begrenzung des Schraubkappenmantels auf.

## Beschreibung

Die Erfindung betrifft eine Kunststoff-Verschlusskappe mit Kappenboden und zylindrischem Mantel, an welchem Befestigungselemente zum lösbaren Anbringen auf einem Behälterhals vorgesehen sind, und mit einem einstückig mit der Kunststoff-Verschlusskappe im Spritzgussverfahren hergestellten Garantieband, welches über wenigstens ein abreissbares Verbindungselement mit der Verschlusskappe verbunden ist. Das Verbindungselement weist dabei kleinere Wandstärke auf als die Verschlusskappe und/oder das Garantieband; alternativ kann das Verbindungselement auch aus einer Mehrzahl von Verbindungsstegen zwischen Verschlusskappe und Garantieband bestehen wobei die Verbindungsstege ebenfalls kleinere Abmessung in radialer Richtung aufweisen können, als die Wandstärke des Garantiebands und des Kappenmantels.

Das Verbindungselement kann auch aus einer einfachen Schwächung derWandstärke bestehen, so dass das Garantieband abreissbar ist. In der Praxis am meisten bewährt haben sich aber Garantiebänder mit Abreissstegen, die über den Umfang verteilt sind und die eine leicht zerbrechliche/abreissbare Verbindung zwischen Garantieband und Kappen-Mantel herstellen.

Derartige Kunststoff-Verschlusskappen sind in Vielzahl bekannt und gebräuchlich. Sie werden im Spritzgussverfahren rationell in Massenfertigung hergestellt. Ein wesentliches Problem besteht dabei darin, dass in relativ kurzen Zykluszeiten im Spritzgusswerkzeug die Form mit dem plastifizierten Kunststoff gefüllt werden muss. Dabei ist man bisher davon ausgegangen, dass vor allem eine gleichmässige Füllung des Garantiebands nur erreichbar ist, wenn die Angussstelle exakt zentrisch in der Mitte des Kappenbodens angeordnet ist. Damit haben die sich aufteilenden Kunststoff-Ströme in der Form jeweils gleichen Weg bis zur endgültigen Füllung des am weitesten von der Angussstelle entfernten Teils des Garantiebands zurückzulegen. Die Zusammenhänge dieser Spritzgusstechnik sind beschrieben in der US-PS-4,345,692. Dementsprechend wird bei einem weltweiten Verbrauch von Schraubkappen für Getränkeflaschen in zweistelliger Milliardenhöhe bei sämtlichen Verschlüssen bzw. Spritzgusswerkzeugen der Anguss im Zentrum des Schraubkappenbodens vorgesehen, wobei in der Regel von aussen, d.h. von der Aussenseite des Kappenbodens her angegossen wird.

Erfindungsgemäss wurde nun gefunden, dass diese Angussstelle zu einer mechanischen Schwächung des Kappenbodens führt, welche exakt im Zentrum des Kappenbodens, also an der Stelle dergrössten Biegebeanspruchung auftritt.

Zur Verbesserung der Stabilität einer solchen Verschlusskappe wurde bereits vor Jahren in der EP-A1-178 253 vorgeschlagen, den Kappenboden analog einem Druckbehälter zu wölben. Derart gewölbte Verschlüsse haben sich jedoch in der Praxis nicht durchgesetzt, weil sie eine Vielzahl anderer Nachteile aufweisen. Das Problem der Schwächung des Kappenbodens durch die Angussstelle ist nach wie vor ungelöst.

Es wurde auch bereits vorgeschlagen, den Kappenboden durch sternförmige Verstärkungsstege zu versteifen oder den Kappenboden nach innen zu wölben, um den Kappenboden zu verstärken, ein übermässiges Durchbiegen ("doming") zu vermeiden und die Spannungsrissbeständigkeit zu erhöhen. Auch diese Massnahmen haben sich in der Praxis nicht allgemein durchsetzen können, weil sie die Herstellkosten und die Formkosten erhöhen und in vielen Fällen auch mit Dichtungsanordnungen kollidieren, die z.B. das Anbringen von Versteifungsstegen verunmöglichen.

Aufgabe der Erfindung ist es, die Nachteile des Bekannten zu vermeiden, insbesondere also eine Verschlusskappe und ein Werkzeug zu deren Herstellung zu schaffen, welche die Festigkeit der Verschlusskappe wesentlich verbessern, ohne den Verschluss zu verteuern, insbesondere ohne die Wandstärke zu erhöhen, ohne Verstärkungsrippen anzubringen oder gar den Kappenboden gewölbt auszubilden.

Erfindungsgemäss wird diese Aufgabe in erster Linie gemäss Kennzeichen von Patentanspruch 1 gelöst. Es hat sich völlig überraschend gezeigt, dass die Angussstelle ausserhalb des Zentrums einer solchen Schraubkappe angeordnet werden kann, ohne dass die dadurch bewirkten Asymmetrien der Kunststoff-Ströme zu einer schlechten Füllung des Garantieband-Abschnitts führen. Dies ist vor allem deshalb überraschend, weil die starke Querschnitts-Reduzierung zwischen Kappenmantel und Garantieband im Bereich des oder der Verbindungselemente (meist Stege) die Füllung ausserordentlich kritisch macht.

Besonders gute Erhöhung der Biegefestigkeit und Spannungsrissbeständigkeit bei gleichzeitig guter Füllung des Werkzeugs mit dem plastifizierten Kunststoff auch bei extrem dünnen Garantieband-Abreissstegen ergibt sich erfindungsgemäss, wenn der Anguss im Abstand von wenigstens 0,2 d vom Zentrum des Kappenbodens angeordnet ist, wobei d der Innendurchmesser des Mantels in dem der Kopfplatte benachbarten Abschnitt ist.

Die Verschlusskappe lässt sich dabei weiter optimieren, wenn der Anguss wenigstens 0,15 d und vorzugsweise etwa 0,2 d vom äusseren Rand des Kappenbodens entfernt ist, wobei d wieder der Innendurchmesser des Mantels in dem der Kopfplatte benachbarten Teil ist.

Der Durchmesser wird dabei ohne Berücksichtigung der auf der Innenseite des Mantels vorspringenden Elemente zum Verbinden der Schraubkappe mit dem Behälter ermittelt. Bei Flaschen-Schraubverschlüssen , für welche die Erfindung besonders vorteil haft einsetzbar ist, sind derartige Verbindungselemente in der Regel Gewindegänge zum Aufschrauben der Verschlusskappe auf einen Flaschenhals.

Sofern in einem Ausnahmefall mehr als ein Anguss vorgesehen ist, ist wesentlich, dass keiner der Angüsse näher am Zentrum des Kappenbodens angeordnet wird, als 0,2 d.

Insgesamt schafft die Erfindung auf optimal einfache und überraschende Weise eine Kunststoff-Verschlusskappe sowie ein Werkzeug zur Herstellung einer solchen Verschlusskappe mit wesentlich verbesserter Biegefestigkeit und Spannungsrissbeständigkeit ohne jeden Mehraufwand bei der Herstellung des Verschlusses oder des Werkzeugs.

Die Erfindung ist im folgenden in Ausführungsbeispielen anhand der Zeichnungen näher erläutert. Es zeigen:
Figur 1 die schematische Schnittdarstellung eines Werkzeugs und eines Verschlusses mit den Merkmalen der Erfindung,
Figur 2 das Werkzeug gemäss Figur 1 in verkleinertem Mass-stab und
Figur 3 eine Verschlusskappe mit abgewandelten Verbindungselementen für das Garantieband.

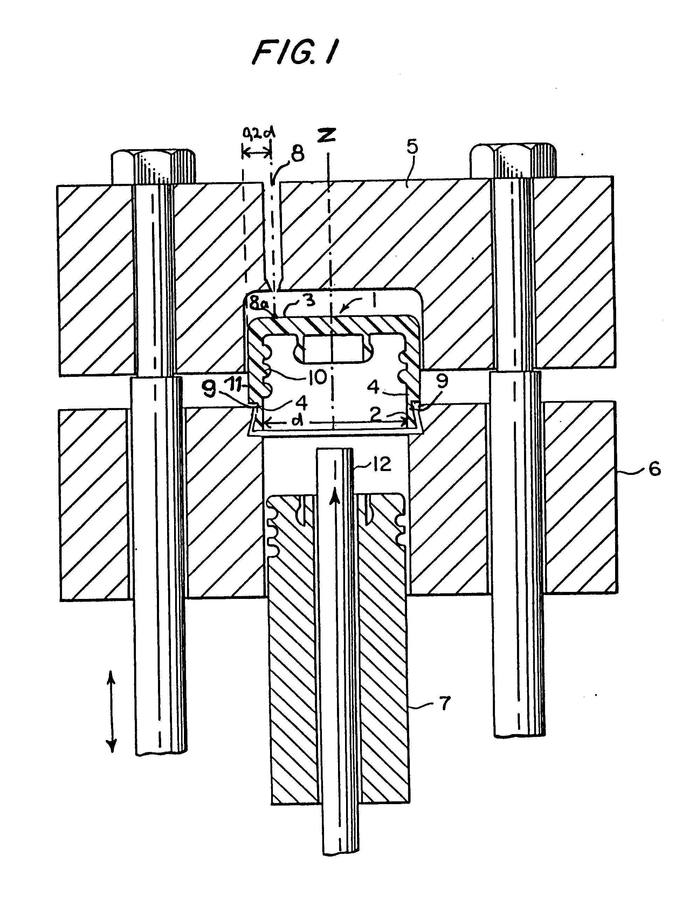

Gemäss Figur 1 wird eine Verschlusskappe 1 durch ein schematisch angedeutetes Spritzgusswerkzeug gefertigt, welches zwei äussere Werkzeugteile 5 und 6 sowie Kern 7 als inneres Werkzeugteil aufweist. In Figur 1 ist angedeutet, wie das Werkzeugteil 5 nach oben verlagert wird, um das Werkzeugteil 7 mit Hinterschneidungen zur Formung eines Gewindes 10 aus der Verschlusskappe 1 herausziehen zu können. Selbstverständlich ist die Erfindung nicht auf die dargestellte Form eines Zwei-Platten-Werkzeugs beschränkt, sondern es können auch andere Bauarten von Spritzgussformen z.B. mit zusammenfaltbaren Kernen oder mit Schiebern oder mit mehreren Platten Anwendung finden.

Die im Schnitt dargestellte Verschlusskappe 1 ist eine handelsübliche Schraubkappe zum Verschliessen von Mineralwasserund Softdrinks. Die Schraubkappe 1 weist einen Kappenboden 3 auf, der in einen Mantel 11 übergeht. Der Mantel 11 zeigt auf seiner Innenseite das Gewinde 10. Am Mantel 11 ist an der unteren Kante ringförmig eine starke Materialverjüngung vorgesehen, die als Verbindungselement bzw. als Sollreissstelle zwischen Mantel 11 und einem handelsüblichen Garantieband 2 dient. Die dargestellte Verbindungsstelle besteht in einer Materialverjüngung, in deren Bereich das Material derart dünn ist, dass das Garantieband beim erstmaligen Oeffnen einer Flasche seine Garantiefunktion erfüllt und an dieser Stelle reisst. Beim Garantieband 2 handelt es sich um ein warmverformbares Garantieband wie es z.B. aus der US-PS-4,345,692 bekannt ist. Derartige Garantiebänder werden nach dem erstmaligen Aufschrauben auf eine Flasche durch Warmverformung um einen Wulst an der Flasche gelegt, so dass sich der Innendurchmesser des Garantiebands 2 verkleinert und ein Oeffnen der Flasche ohne Zerreissen des Garantiebands 2 nicht mehr möglich ist.

Selbstverständlich ist die Erfindung weder auf derartige warmverformbare Garantiebänder noch auf die Form eines bestimmten Verbindungselements 9 beschränkt. Stattdessen kann z.B. auch ein mechanisch mit einem Vorsprung am Behälterhals verbindbares/einrastbares Garantieband verwendet werden, es können auch zweiteilige Garantieband-Konstruktionen vorgesehen sein. Als Verbindungselemente 9 können die verschiedensten Formen von Stegen oder Materialbrücken und Perforationen dienen.

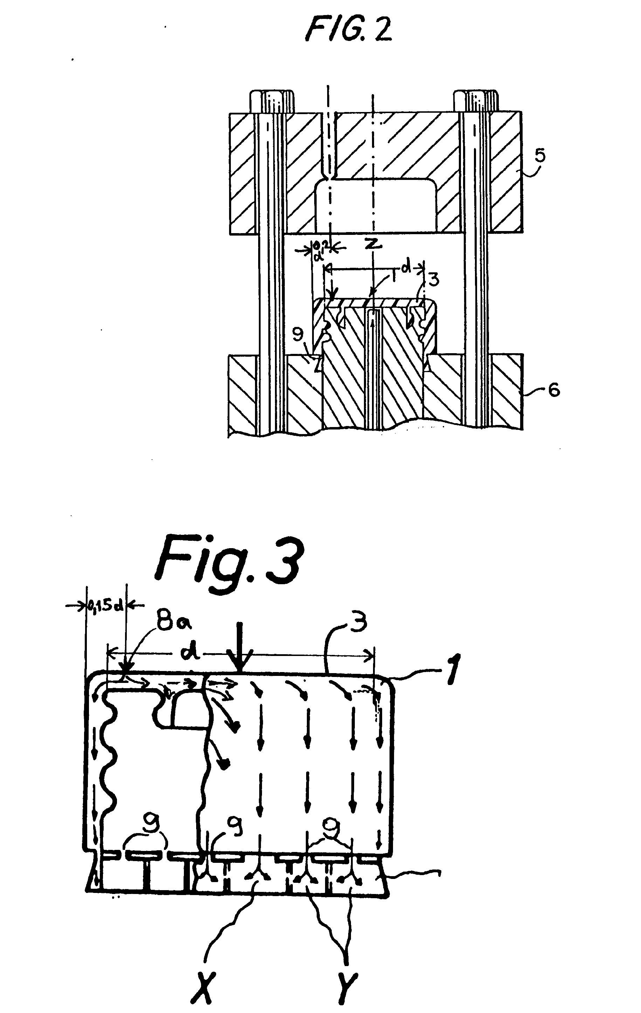

Wie in Figur 1 und 2 dargestellt, ist die Anguss-Bohrung 8 exzentrisch angeordnet. Ihr Abstand zur äusseren Begrenzungsfläche des Mantels 11 beträgt 0,2 d. Die Angussstelle 8a der Schraubkappe ist damit auch erheblich weiter vom Zentrum der Schraubkappe entfernt, als 0,2 d, wobei d der Innendurchmesser der Verschlusskappe 1 oberhalb des Gewindes 10 ist.

Figur 2 zeigt das Werkzeug gemäss Figur 1 mit vollständig abgehobenem Werkzeugteil 5 vor dem Herausziehen des inneren Kerns bzw. Werkzeugteils 7.

Figur 3 zeigt ein abgewandeltes Ausführungsbeispiel der Erfindung, bei welchem als Verbindungselemente 9 Stege zwischen dem Garantieband 2 und der Verschlusskappe 1 vorgesehen sind. Die Pfeile deuten die Fliessrichtung des plastifizierten Kunststoffs während des Spritzvorgangs an. Aus der Darstellung wird ersichtlich, wie die Schraubkappe durch die exzentrische Angussstelle 8a gefüllt wird. Trotzdem hat sich überraschenderweise gezeigt, dass sich Verschlusskappen erfindungsgemäss mit gleicher Spritzgeschwindigkeit (Schusszahl) und ohne Beeinträchtigung durch den asymmetrischen Fluss des plastifizierten Materials herstellen lassen. Der Abstand der Angussstelle 8a vom Aussendurchmesser des Mantels 11 beträgt 0,15 d, was weiter gesteigerte Biegefestigkeit des Kappenbodens ergibt.

## Patentansprüche

1. Kunststoff-Verschlusskappe (1) mit Kappenboden (3) und zylindrischem Mantel (11) an welchem Befestigungselemente (10) zum lösbaren Anbringen auf einem Behälterhals vorgesehen sind und mit einem einstückig mit der Verschlusskappe im Spritzgussverfahren hergestellten Garantieband (2), welches über wenigstens ein abreissbares Verbindungselement (9) mit der Verschlusskappe (1) verbunden ist, wobei das Verbindungselement (9) eine kleinere Wandstärke aufweist, als die Verschlusskappe und/oder das Garantieband, und/oder wobei das Verbindungselement aus einer Mehrzahl von Verbindungsstegen zwischen Verschlusskappe und Garantieband besteht, dadurch gekennzeichnet, dass die Angussstelle, von welcher aus die Verschlusskappe beim Spritzgiessen gefüllt wird, ausserhalb des Zentrums des Kappenbodens (3) angeordnet ist.

2. Kunststoff-Verschlusskappe nach Anspruch 1, dadurch gekennzeichnet, dass die Angussstelle (7a) im bestand von wenigstens 0,2 d vom Zentrum des Kappenbodens angeordnet ist, wobei d der Innendurchmesser des Mantels (11) der Verschlusskappe in dem dem Kappenboden (3) benachbarten Bereich ist.

3. Kunststoff-Verschlusskappe nach Anspruch 1 oder 2, dadurch gekennzeichnet, dass die Angussstelle (8a) auf der Aussenseite des Kappenbodens (3) angeordnet ist.

4. Kunststoff-Verschlusskappe nach einem der vorangegangenen Ansprüche, dadurch gekennzeichnet, dass die Angussstelle wenigstens 0,15 d und vorzugsweise etwa 0,2 d vom äusseren Rand des Kappenbodens entfernt ist.

5. Spritzgusswerkzeug zum Herstellen einer Kunststoff-Verschlusskappe nach einem der vorangegangenen Ansprüche mit wenigstens einem Werkzeugteil (5, 6,) zum Formen der Aussenwand der Verschlusskappe (1), das mit wenigstens einem Werkzeugteil (7) zum Formen der Innenwand (4) der Verschlusskappe (1) in Eingriff bringbar ist, dadurch gekennzeichnet, dass die Angussöffnung (8) zum Einspritzen des plastifizierten Kunststoffs ausserhalb des Zentrums Z des Werkzeugteils (8) zum Formen der Kappenaussenwand im Bereich des Kappenbodens (3) vorgesehen ist.

6. Spritzgusswerkzeug nach Anspruch 5, dadurch gekennzeichnet, dass die Angussöffnung (8) wenigstens 0,15 d und vorzugsweise 0,2 d von der inneren Begrenzungsfläche des Werkzeugteils (5), welches die Oberfläche des Kappenmantels (11) formt, entfernt ist.

7. Spritzgusswerkzeug nach Anspruch 5 oder 6, dadurch gekennzeichnet, dass die Angussöffnung (8) wenigstens 0,2 d vom Zentrum der Schraubkappe (1) entfernt ist.
